Europäisches Patentamt

**European Patent Office**

Office européen des brevets

(11) Publication number: **0 100 594**
**A2**

# (12) EUROPEAN PATENT APPLICATION

(21) Application number: **83303450.7**

(22) Date of filing: **15.06.83**

(51) Int. Cl.³: **H 04 L 11/16**

(30) Priority: **04.08.82 GB 8222530**

(43) Date of publication of application:
**15.02.84 Bulletin 84/7**

(84) Designated Contracting States:
**AT BE CH DE FR IT LI LU NL SE**

(71) Applicant: **PLESSEY OVERSEAS LIMITED**
**Vicarage Lane**
**Ilford Essex IGI 4AQ(GB)**

(72) Inventor: **Beaufoy, Raymond**
**1 Conway Road**
**Taplow, Maidenhead(GB)**

(74) Representative: **Hart, Robert John**
**Plessey Telecommunications plc Edge Lane**
**Liverpool L7 9NW(GB)**

(54) **Improved local area network systems.**

(57) In local area networks (LAN's) where a number of terminal equipment stations communicate with each other directly over a common medium (optic fibre, co-axial cable, or broadcasts using radio, ultrasonic, infra red etc) without the intervention of a common switch, the most significant problem to be resolved is in the connection of a calling device to the network. According to the invention every station connected to the common medium monitors the medium continuously and on each application to use the line can distinguish between a free level (level 0) a signal application (level 1) and a multiple application (level 2). Upon application to use the medium if the line reaches a level 2 then the applying station knows that two or more other stations are in contention. When the waiting station detects a level 1 it knows that the last of the previous group is being served and when the line becomes free it can apply its request signal. If this results in a level 1 signal after a suitable guard time the requesting station knows that it is the only applicant and can start its traffic transaction. For the purposes of contention resolution every station has a binary number which may comprise, depending on system requirements, any of the following:-

A) A measure of the time for which the station has been waiting (i.e. the state of the clock in the station).

B) A number unique to the station, allocated for this purpose.

C) A combination of A followed by B.

This allows (i) in the case of A the stations to be allocated in order of application, (ii) in the case of B the allocation of a group before newcomers but does not allow for queuing within the group whereas (iii) in the case of C the allocation takes into account both priority and time of request.

EP 0 100 594 A2

TITLE:    IMPROVED LOCAL AREA NETWORK SYSTEMS

The present invention relates to local area network systems for use with computer and office automation systems and is more particularly concerned with collision control arrangements for use in such systems.

Local area networks consist basically of a common communication path to which are connected various equipments which require to communicate.  Typically the equipments connected to the communications medium consist of computers, micro-processors, computer terminals, word processors, facsimile equipment and voice terminals together with gateways to public and other external communication networks.

The communication path usually spans distances in the range of 0.1 to 10 Km and is ideally suited for use in office buildings as a permanently installed communications infrastructure.  The communications path consists of a transmission medium and a set of interfaces for subscriber connections.  The transmission medium can be a co-axial cable, a twisted pair, an optical fibre, a radio or a infra red communication channel or the like.  Each interface matches the input/output structure of the subscriber to the communication path protocol.  The communication path may either be formed into a ring, of the type shown in British Patent Specification 1,168,476, or a suitably terminated transmission line, of the type shown in British Patent Specification 1,314,810.

The communication path transmission protocols operate either on a packet switched basis or in a time division multiplex basis. The packet switched arrangements are ideally suited to burst mode transmission systems, such as is required for handling input/output terminal requirements in a computer system, whereas the time division multiplex arrangements are ideally suited to more continuous information transmission, as is required in telephone connections. To be of advantage in the environment of an integrated communications infrastructure the local area network system should be capable of handling both burst mode and telephone type transmission requirements.

The simplest transmission protocols for such systems include a contention protocol where each interface independantly decides when to transmit an addressed information packet. With such a simple system there is a possibility that interfaces handling newly arriving packets may destroy the transmissions already under way. In this case a collision is said to occur. Alternative arrangements may be provided to reduce this problem as all interfaces can be arranged to sense the occupancy of the medium before transmitting. Transmissions are inhibited whenever the medium is found to be busy. Collisions still occur, however, due to the non-zero propagation delay of the communications medium between interfaces. Some of the simpler systems allow colliding packets to run to completion which of course decreases the effective throughput of the communication system. Alternatively the interfaces may be adapted to sense the communication medium before and during transmission. If a collision is detected the transmission is aborted immediately. This procedure reduces the wasted time due to the transmission of collided packets, and typically the colliding interfaces reschedule a retransmission of the packet at a later time; different for each interface of the system.

Such arrangements have the major problem that a wide range of delays may be encountered when applying for the common communication medium; and this is of particular disadvantage when data messages involving a succession of data packets or continuous communication is required to be accommodated by the local area network system. The problems as far as multi packet data messages are concerned can be overcome by using large buffer stores to reassemble the message after transmission in packet form in the interface equipment however, in the case of the continuous communication facilities required for voice communication the problems are particularly difficult to surmount owing to restrictions imposed by various network standards. It is an aim of the present invention to provide a local area network system which incorporates a collision contention arrangement which reduces the delay variations encountered in gaining access to the communication medium and provides fairer service order.

According to the invention there is provided a data communication system comprising a communication medium a plurality of subscriber's interface units connected to the medium each interface unit including a data transmission arrangement for transmitting data signals onto the medium and a data reception arrangement for receiving data signals from the medium and medium seizure means coupled to the transmission arrangement and the reception arrangement and adapted to launch onto the communication medium when that medium is free a unique priority signal. The reception arrangement includes means for detecting if more than one interface is concurrently applying a demand to the communication medium and to suspend a medium seizure demand when the priority level of the signal on the medium exceeds that of the demanding interface.

In the case of non-concurrent demands the station includes means for deferring the demand until all the prior concurrent demands have been satisfied.

Typically the unique priority signal is a binary number indicative of a) a measure of the time for which the station has been waiting, b) a number unique to the station, allotted for this purpose or c) a combination of a followed by b, transmitted in series during a medium seizure demand. Each bit of the priority number is applied to the medium in d.c. or carrier form for a predetermined duration of 2d, where d is the propagation delay of the communication medium. Each interface includes a comparator means adapted to compare the state of each bit of the priority number on the medium during the medium seizure demand period. When the most significant 'O' of an interface equipment priority number co-incides with a

non 'O' condition on the medium that interface equipment terminates its demand. Accordingly, in concurrent seizure demand situations, 50% of the conflicts will be resolved using the first digit of the priority number; 75% using the second digit of the priority number and 87½% using the third digit of the priority number.

The choice of binary number in accordance with the criteria defined above when using; a) gives to the nearest time unit of the station clock the exact order of application, b) ensures service to a group applying together before newcomers but does not queue the group or c) deals with the situation where two stations have applied within the same time unit of the station clock.

The most convenient signalling waveform for contention resolution is direct current since it is easily made additive in voltage level and suffers negligible attenuation, however, any waveform can be used as long as the more than one '1' condition can be sensed.

The speed of the contention signalling must be such that delays from end to end of the medium are taken account of, resulting in typically 5 to 10 us per bit per kilometer distance.

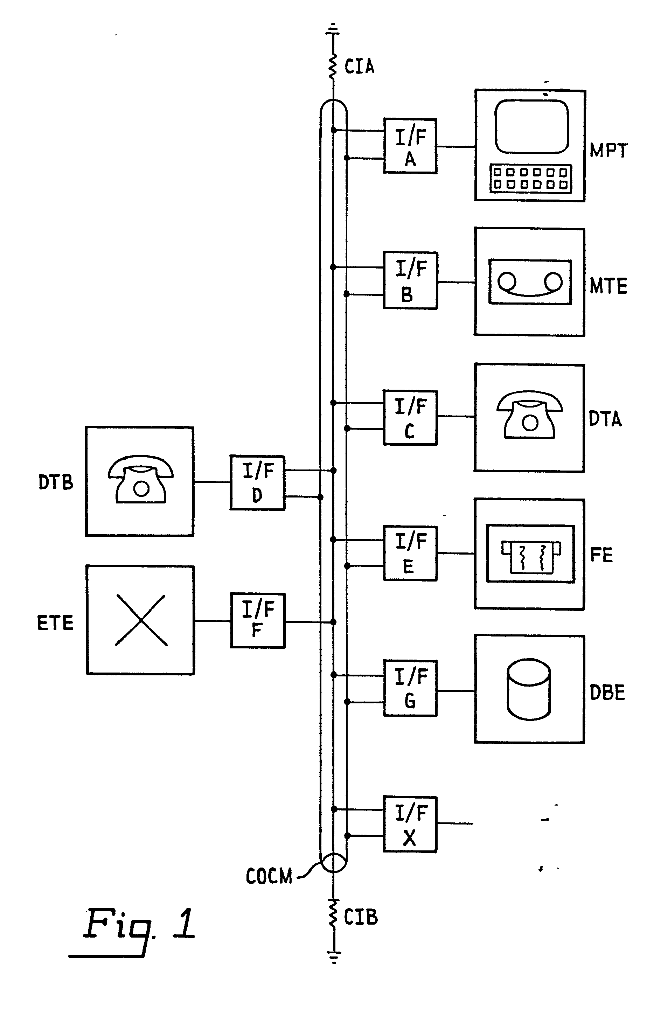

The invention will be more readily understood from the following description which should be read in conjunction with the accompanying drawings. Of the drawings Figure 1 shows the system in block form, Figure 2 shows a typical waveform sequence, and Figure 3 shows a flow diagram of the medium seizure operations performed by an interface.

The embodiment of the invention uses a co-axial cable communication medium COCM which is terminated in its characteristic impedance CIA and CIB at each end. Connected to the communication medium are a number of interface units I/FA, I/FB, I/FC, I/FD, I/FE, I/FF, I/FG  and I/FX which match the various subscriber terminals of the local area network to the communication medium COCM.  The communication medium is operated on a time division multiplex basis with 30 duplex channels operating at a 5Mb/s rate.  Each channel can be used in a duplex manner with go and return sub channels or alternate use of the channel in each direction.  For data each full time slot provides for one line of text. The terminals connected to the system will vary of course depending upon the requirements of the system.  Typically micro-processor based terminals such as MPT can be connected to the medium as can bulk data storage equipment MTE.  Similarly digital telephones DTA and DTB allow for voice communication in addition to the handling of computer based data. In addition dedicated special purpose stations may be provided for (i) digital telephone conferencing, (ii) short code dialling (iii) external connection to public or private communication networks ETE (iv) voice recording (v) network usage accounting and (vi) protocol conversion stations. Obviously the data processing stations may include (i) word processors, (ii) access units for a main frame computer systems (iii) line printers, (iv) facsimile equipment FE, (v) acoustic couplers for passing data over the public telephone network and (vi) bulk storage data bases DBE.

Each equipment connected to the local area network is interfaced by its own dedicated interface unit which may be particularised to the equipment from a network point of view by use of a discrete equipment priority number. This number may be the same as the system equipment number or may be different therefrom. The equipment priority number may be used to resolve concurrent demands for the communication medium and its particular advantages will become clearer when considering the operation of the system.

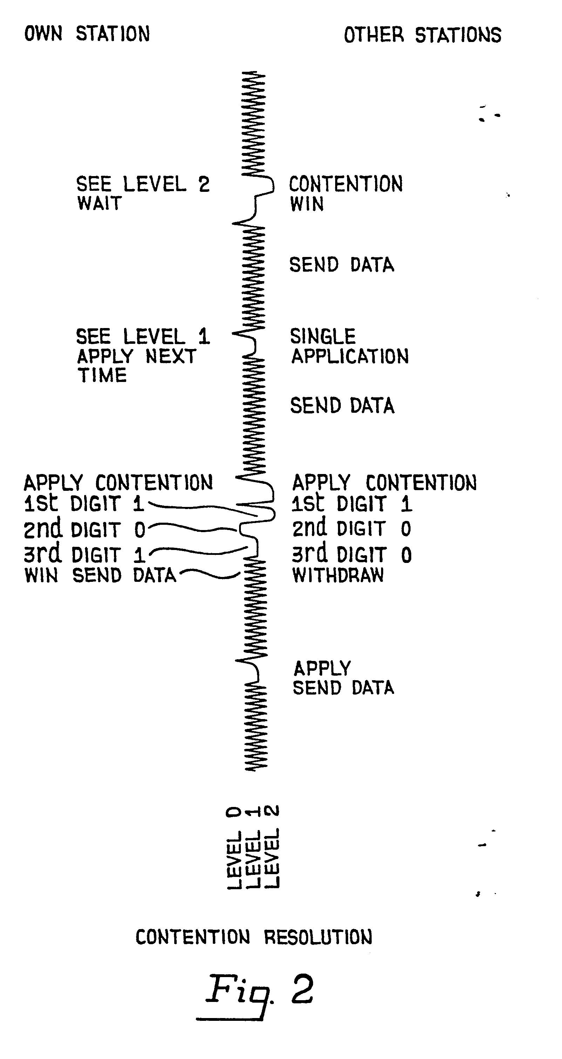

## The Process (Fig. 2)

Every station monitors the common line continuously and on each application can distinguish between a free line (level 0), a single application (level 1) and a multiple application (level 2).

If on the previous application the line reaches level 2 then our waiting station knows that two or more are in contention and when the line becomes free does not apply, i.e. it defers to the group already in contention.

When our waiting station detects level 1 in an application, it knows that the last of the previous group is being served and when the line becomes free can apply its signal.

If this results in level 1 on the line, after a suitable guard time, our station knows that he is the only applicant and begins his traffic transaction whether single burst or multiplexed.

If level 2 is detected, our station knows it is in contention with one or more others which must be resolved before traffic can be sent.

For the purpose of contention resolution every station has a binary number which may comprise, depending on system requirements any of the following:

A)   A measure of the time for which the station has been waiting, conveniently arrived at by counting at the clock rate.

B)   A number unique to the station, allotted for this purpose.

C)   A combination of A followed by B.

On detecting contention (level 2) the stations concerned apply to the line for a fixed and adequate time, the first bit of their binary number, and behave as follows:

| Line Level | Own Signal | Action |
|---|---|---|
| 2 | 1 | Apply next bit |
| 0 | 0 | Apply next bit |
| 1 or 2 | 0 | Withdraw and reapply when line next free |
| 1 | 1 | No other contenders left start transaction |

Thus 0's in the presence of other 1's cause the station to drop out of the contention eventually leaving one who can start his transaction, those having dropped out have priority over newcomers.

The choice of binary numbers A B or C above is determined by:

A    gives to the nearest time unit of the station clock order of application, subject to some error due to line delays.

B    ensures service to a group applying together before newcomers but does not queue within the group.

C    deals with the low probability of application within the same time unit of the station clock. Failure of resolution by time order is backed up by unique station number.

The most convenient signalling waveform for contention resolution is direct current since it is easily made additive in voltage level and suffers negligible attenuation, but if preferred the data waveform can be used.

The speed of contention signalling must be such that delays from end to end of the medium are taken account of, resulting in typically 5 to 10 us per bit per kilometer distance.

As an option to each station monitoring the state of previous applications, priority can be given to those who have dropped out of a contention by adding a prefix bit to the losing station number and dealing with losers so identiied, before newcomers.

A further prefix bit can identify the next group awaiting contention and so on if required.

Where the contention resolution is taking place in a multiplexed system having timeslots chosen in length for their suitability for the traffic to be carried, it is possible that occasionally contention resolution requires longer than one time slot. In these cases contention can continue in the next free time slot or if preferred, in the next appearance of the multiplexed time slot.

## System Operation

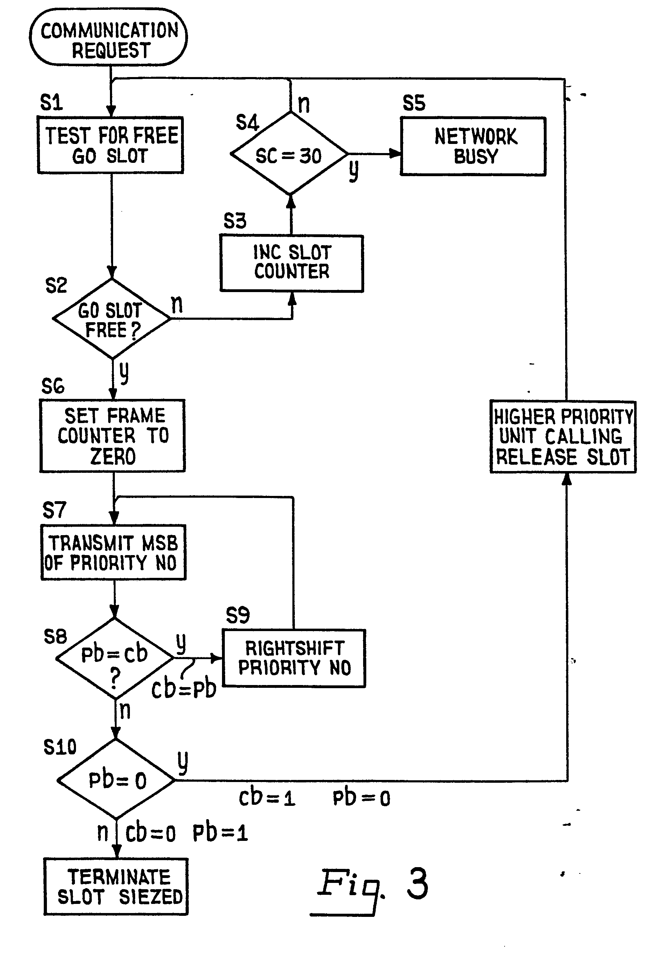

When a system terminal requires to communicate with another terminal it takes into use its own interface equipment. The sequence of events is shown in the flow diagram of Fig. 3 and the following operations will be described with reference to that diagram, which deals with the case of a multiplexed system. The process is equally applicable to a non multiplexed, variable length burst system and the equivalent flow diagram would be somewhat simpler. In Fig. 3 Pb is the level of the station signal and Cb that of the communication medium.

## S1 - Test for Contention in Progress

The interface equipment monitors the "Go" slot of each channel as it occurs to see if a contention is in progress, i.e. level 2 is detected, in which case the station does not attempt to seize the next free time slot. Typically the use of so called "Manchester" codes or a discrete busy bit in the channel bit stream may be used to prevent a true data stream from mimicing a free conditon.

S2, S3  -  Test for free "Go" slot

Where S1 indicates no contention is in progress this station wishing to send traffic looks for the next free time slot, i.e. one not in use in a multiplexed mode.

S4  -  Apply Seize bit or Next Significant Bit of priority Number

Where S1, S2 and S3 are all satisfied the station applies its sequence of seize bit followed by priority bits one by one until either this staion withdraws owing to lower priority or has succeeded in seizing the channel owing to highest priority number.

S5  -  Right Shift Priority Number

This sequences the priority bits in turn until slot seizure or withdraw have been achieved.

S6  -  Withdraw with priority next time

This condition resulting from losing the contention causes the S1, no contention requirement, to be bypassed giving this station priority over newcommers.

S7  -  Slot Seized

This seizure persists until all data has been transmitted and the channel released by resetting the memory with an internal end of transmission signal.  Having seized a slot the station will transmit the address of the required called terminals who will note the time slot in their frame counter and interchange data without the need for further contention or addressing.

The above description has been of one embodiment only. Alternative arrangements will readily be seen by those skilled in the art; for example the seize procedure has used an "in channel" signalling technique whereas by the use of a separate seize wire or channel the conflicts could be resolved using the priority-number comparison techniques of the invention on that separate wire or channel. Also although the channels are described as duplex they can be used in a simplex manner involving for example, a polling technique where say a master terminal polls a number of slave terminals by identifying the polled terminal in each 'GO' slot and the polled terminal responds in the corresponding 'RETURN' slot. Alternatively to assist in the time slot selection process each station can be arranged to include a list of busy and free time slots.

WHAT WE CLAIM IS

1.    A data communication system comprising a common communication medium and a plurality of subscriber's interface units connected to the medium, each interface unit including a data transmission arrangement for transmitting data signals on to the communication medium and a data reception arrangement for receiving data signals from the communication medium and medium seizure means coupled to the data transmission arrangement and the data reception arrangement and arranged, when an interface unit requires to transmit on to the communication medium and the communication medium is free, to launch on to the communication medium a unique priority signal and the data reception arrangement includes means for detecting if more than one interface unit is concurrently applying to demand on to the communication medium and means for suspending a medium seizure demand when the priority level of the signal on the medium exceed that of the demanding interface unit.

2.    A data communication system as claimed in Claim 1 in which the unique priority signal is a binary number which is transmitted on to the communication by said medium seizure means in serial form in synchronisation with priority signals from concurrent demanding interface units.

3.    A data communication system as claimed in Claim 2 in which each station connected to the communication medium is allocated a unique number and the unique priority signal is drived from the number of the station connected to the interface unit.

4.   A data communication system as claimed in Claim 2 in which the interface units include means for deferring the launch of the unique priority number until all prior concurrent demands have been satisfied and said interface unit also includes means for recording the elapsed time since requesting use of the communication medium and the communication medium becoming free and the unique priority signal is derived from the elapsed time recorded.

5.   A data communication system as claimed in Claim 4 in which each station connected to the communication medium is allocated a unique number and the unique priority signal is derived from the number of the station together with the elapsed time recorded.

6.   A data communication system as claimed in any of Claims 2 to 5 in which each bit of the priority signal is applied to the communication medium in ascending order of significance.

7.   A data communication system as claimed in Claim 6 in which corresponding bits of equal significance concurrently applied add to each other in the communication medium and each interface unit includes comparator means arranged to compare the state of each bit of the priority signal on the communication medium during a medium seizure demand and said comparator means is arranged to terminate the launch of the priority signal when the comparator detects a marked bit on the communication medium when the corresponding bit in the interface unit's priority signal is unmarked.

- 16 -     0100594

8.   A data communication system according to any one of the preceding claims in which the priority signals are d.c. signals and each bit is applied to the communication medium for a duration of 2d and where d is the propogation delay of the communication medium.

9.   A data communication system according to any one of the preceding claims in which the communication medium is operated on a time division multiplex basis.

10.   A data communication system according to Claim 9 in which each time slot in the time division multiplex includes a contention resolution period in which interface units requiring to use the communication medium apply their unique priority signals.

Fig. 1

CONTENTION RESOLUTION

*Fig. 2*

0100594

3/3

**COMMUNICATION REQUEST**

S1 — TEST FOR FREE GO SLOT

S4 — SC = 30

S5 — NETWORK BUSY

S3 — INC SLOT COUNTER

S2 — GO SLOT FREE?

S6 — SET FRAME COUNTER TO ZERO

HIGHER PRIORITY UNIT CALLING RELEASE SLOT

S7 — TRANSMIT MSB OF PRIORITY NO

S9 — RIGHTSHIFT PRIORITY NO

S8 — Pb = cb ?   cb = Pb

S10 — Pb = 0   cb = 1   Pb = 0

n   cb = 0   Pb = 1

TERMINATE SLOT SIEZED

*Fig.* 3